(19) Europäisches Patentamt
European Patent Office
Office européen des brevets

(11) **EP 2 738 573 A1**

(12) **DEMANDE DE BREVET EUROPEEN**

(43) Date de publication:
**04.06.2014 Bulletin 2014/23**

(51) Int Cl.:
***G01S 19/02*** (2010.01)   ***G01S 19/07*** (2010.01)
***G01S 19/40*** (2010.01)

(21) Numéro de dépôt: **13194950.5**

(22) Date de dépôt: **28.11.2013**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**

(30) Priorité: **30.11.2012  FR 1203245**

(71) Demandeur: **Thales**
**92200 Neuilly Sur Seine (FR)**

(72) Inventeur: **Trilles, Sébastien**
**31100 TOULOUSE (FR)**

(74) Mandataire: **Priori, Enrico**
**Marks & Clerk France**
**Conseils en Propriété Industrielle**
**Immeuble «Visium»**
**22, avenue Aristide Briand**
**94117 Arcueil Cedex (FR)**

(54) **Procédé et système de détermination d'une erreur de l'estimation du temps de la traversée de la ionosphère**

(57)   Procédé de détermination d'une erreur de l'estimation du temps de traversée de la ionosphère par un signal suivant un axe à vue vertical associé à un récepteur, l'axe à vue vertical coupant la ionosphère en un point d'intérêt, l'axe à vue vertical étant un axe passant par le récepteur et un satellite d'intérêt. Le procédé comprend une première étape de détermination d'au moins deux points de coupure de la ionosphère par deux axes à vue entre un satellite et au moins deux stations au sol. Le procédé comporte aussi une deuxième étape de détermination d'au moins un angle formé par un segment allant dudit point d'intérêt à un desdits points de coupure et par un segment allant dudit point d'intérêt à un autre desdits points de coupure. Enfin le procédé comporte une troisième étape de détermination de la dispersion spatiale desdits points de coupure par rapport audit point d'intérêt à partir dudit angle, par différence avec un angle prédéterminé et prise de la moyenne dudit ou desdits différences.

FIG.1

**Description**

La présente invention concerne le domaine des procédés d'estimation d'une erreur du temps de propagation d'un signal (connu aussi sous le nom de distance du trajet) entre un satellite et une station au sol ou un terminal satellitaire. Ce temps de propagation est calculé en suivant un axe allant du satellite à la station au sol ou au terminal satellitaire. Cet axe est aussi appelé ligne de vue ou axe à vue.

Dans les systèmes de positionnement par satellites, communément appelés GNSS pour son acronyme anglo-saxon, *Global Navigation Satellite System,* un terminal satellitaire fixe ou mobile tel qu'un véhicule ou un aéronef, est localisé par trilatération (La trilatération est une méthode mathématique permettant de déterminer la position relative d'un point en utilisant la géométrie des triangles tout comme la triangulation. Mais contrairement à cette dernière, qui utilise les angles et les distances pour positionner un point, la trilatération utilise les distances entre un minimum de deux points de références) au moyen du calcul des distances le séparant de plusieurs satellites. La précision de l'évaluation de la distance entre le terminal satellitaire ou la station au sol et chacun des satellites est déterminante pour obtenir un positionnement précis. La principale source d'erreur sur l'évaluation de cette distance est le retard accumulé par le signal lorsqu'il traverse l'ionosphère, où l'ionisation partielle des gaz à haute altitude perturbe la propagation du signal et entraine un délai de transmission variable.

Afin d'obtenir une mesure précise du positionnement, il est donc nécessaire de pouvoir disposer d'une estimation du temps du trajet entre les satellites et la station au sol ou le terminal satellitaire, ainsi qu'une estimation de l'erreur d'estimation du temps de trajet. Ceci est typiquement une covariance d'ajustement. Pour cela, les systèmes GNSS connus peuvent être complétés par des systèmes dits d'augmentation, qui délivrent en temps réel des corrections en lien avec l'activité de l'ionosphère. Ces systèmes délivrent aussi des indicateurs d'intégrités garantissant ces corrections. On connait des systèmes d'augmentation basés sur des satellites, communément appelé SBAS, signifiant *Satellite-Based Augmentation System* en anglais. C'est le cas, par exemple, du système EGNOS (pour *European Geostationary Navigation Overlay Service* en anglais) utilisé en Europe, qui diffuse à partir de plusieurs satellites géostationnaires des données de correction à destination de stations au sol ou de terminaux satellitaires utilisant le système GPS (GPS signifiant *Global Positioning System* en anglais).

Dans une approche connue, communément appelée modèle TRIN pour son acronyme anglo-saxon *TRiangular INterpolation,* l'ionosphère est assimilée à une couche mince autour du globe terrestre dans laquelle est accumulée la totalité de la charge électronique de l'ionosphère. Cette couche mince est modélisée par un modèle linéaire formé d'un polyèdre régulier, centré sur la terre et possédant mille-deux-cent-quatre-vingts faces triangulaires.

Les systèmes d'augmentations utilisent des méthodes d'interpolations pour déterminer le délai de propagation d'un signal passant par un point de pénétration déterminé. Un point de pénétration est un point du polyèdre situé à l'intersection avec l'axe à vue passant par le satellite et le terminal satellitaire ou la station au sol. Le point de pénétration est communément appelé IPP, pour son acronyme anglo-saxon *Ionosphere Pierce Point.* Les calculs d'interpolation sont réalisés à partir de la connaissance des retards des signaux passant par des noeuds du polyèdre proche du point de pénétration considéré. En plus de l'estimation de ce délai de propagation, une estimation de l'imprécision de ce délai est réalisée.

L'estimation du contenu électronique total vertical connu aussi sous l'acronyme VTEC pour « Vertical Total Electron Content » en langue anglaise permet d'établir une cartographie des retards ionosphérique sous la forme d'une grille sphérique centrée sur la terre, située en altitude et liée à la rotation de la terre. Les noeuds de la grille sont dénommés IGP, pour l'acronyme anglo-saxon Ionospheric Grid Point. Les systèmes connus sous le nom de SBAS diffusent aux utilisateurs les délais ionosphériques verticaux au dessus des points de la grille, appelée communément grille IONO, ainsi que des informations de fiabilité pour calculer le retard ionosphérique sur les lignes de vue de chaque satellite considéré, par interpolation linéaire sur cette grille. Une mise à jour régulière des valeurs de la grille IONO, typiquement toutes les 30 secondes, est diffusée par les systèmes connus sous le nom de SBAS à destination des utilisateurs du système de navigation.

Cette grille IONO qui est accessible aux utilisateurs des systèmes de navigation, est calculée par interpolation linéaire à partir du modèle TRIN à un temps solaire fixe, l'exposition au soleil de chacun des noeuds du polyèdre étant constante.

Cette grille IONO contient donc l'information de delais verticaux nécessaire pour qu'un utilisateur puisse reconstruire une estimation du délai subi par le signal lors de sa traversée de la couche ionosphérique. Le prodécé est connu et standardisé par le MOPS pour son acronyme anglo-saxo *Minimum Operational Performance Standard.* Connaissant le delai vertical GIVD pour acronyme anglo-saxo *Grid Ionospheric Vertical Delay,* et erreur associée GIVE pour acronyme anglo-saxo *Grid Ionospheric Vertical Error,* de 4 points de la grilles IGP, l'utilisateur calcule, par interpolation linéaire le dalai vertical au point de percement IPP de l'axe à vue satellite-utilisateur, ainsi que l'erreur associée UIVE pour acronyme anglo-saxo *User Ionospheric Vertical Error*, Enfin l'utilisateur applique une fonction de rabattement (modélisée et standardisée par le MOPS) pour passer de delais et erreurs à la verticale au point IPP en delais et erreurs le long de l'axe à vue au même point IPP.

Cependant les procédés, connus dans l'état de la technique, de détermination de cette imprécision ne sont pas assez précis pour effectuer un contrôle efficace du système d'augmentation basé sur des satellites.

L'invention vise à proposer une solution alternative pour l'estimation de l'imprécision du délai de propagation entre un satellite et un terminal satellitaire ou une station au sol.

A cet effet, l'invention a pour objet un procédé de détermination d'une erreur de l'estimation du temps de traversée de la ionosphère par un signal suivant un axe à vue vertical, l'axe à vue vertical coupant la ionosphère en un point d'intérêt, l'axe à vue vertical étant un axe passant par le récepteur et un satellite d'intérêt. Le procédé étant caractérisé en ce qu'il comprend une première étape de détermination d'au moins deux points de coupure de la ionosphère par deux axes à vue entre un satellite et au moins deux stations au sol ou une station au sol et au moins deux satellites. Il comprend aussi une deuxième étape de détermination d'au moins un angle formé par un segment allant du point d'intérêt à un desdits points de coupure et par un segment allant du point d'intérêt à un autre desdits points de coupure. Il comprend enfin une troisième étape de détermination de la dispersion spatiale desdits points de coupure par rapport audit point d'intérêt à partir dudit angle, par différence avec un angle prédéterminé et prise de la moyenne dudit ou desdits différences. Le procédé comporte également une quatrième étape de détermination d'une erreur de l'estimation du temps de traversée de la ionosphère par ajout :

- d'une première erreure de l'estimation du temps de traversée dépendante d'une variance calculée par interpolation à partir d'un modèle TRIN,
- à une deuxième erreure de l'estimation du temps de traversée dépendante de ladite dispersion spatiale.

Le procédé consiste donc à calculer une estimation de l'erreur d'estimation du delai ionosphérique vertical en chaque point de la grille IONO IGP, de façon adaptative en fonction des informations ionosphérique locales, de manière a rendre maximale la disponibilité de service tout en garantissant l'intégrité.

Avantageusement la quatrième étape de détermination utilise la relation :

$$GIVE = TGIVE + t(n)^2\left(\overline{UIVE} + k.\sigma_p^2\right)$$

où *GIVE* est ladite erreur de l'estimation du temps de traversée de la ionosphère,

*TGIVE* est ladite première erreur

$t(n)^2\left(\overline{UIVE} + k.\sigma_p^2\right)$ est ladite deuxième erreur et est composée de :

$\sigma_p^2$ qui est ladite dispersion spatiale,

$t(n)^2$ qui est l'écart type d'une distribution de Student à *n* degré de liberté,

*n* étant le nombre desdits points de coupures utilisés pour le calcul de $\sigma_p^2$,

$\overline{UIVE}$ qui représente la moyenne de l'erreur de calcul du délai de la traversée de la ionosphère par un signal suivant lesdits deux axes à vues et k qui est un coefficient permettant de normaliser $\sigma_p^2$.

Le point par lequel l'axe à vue coupe la ionosphère est aussi appelé un point d'intérêt IGP de la grille IONO diffusée. Les points de coupure sont aussi appelés point de percement IPP pour son acronyme anglais Ionospheric Pierce Point.

Les points de coupures sont situés dans le voisinage du point d'intérêt.

L'invention permet donc d'estimer l'imprécision du délai de propagation entre un satellite et un terminal satellitaire ou une station au sol par interpolation des erreurs diffusées par la grille IONO.

Avantageusement ce procédé contribue à augmenter le monitoring des points IGP de la grille IONO et donc la disponibilité de service d'un système d'augmentation de type SBAS. Au niveau de l'utilisateur ce procédé l'autorise à prendre en compte un nombre maximal de lignes de vues dans le calcul de son point permettant de réduire ainsi ses erreurs de localisation ainsi que l'estimation de ces erreurs.

Avantageusement le procédé comprend une quatrième étape de détermination d'une première distance entre le point d'intérêt et un des points de coupure et d'une deuxième distance entre le point d'intérêt et un autre des points de coupure. De plus la deuxième étape est adaptée pour la détermination de la dispersion spatiale à partir en outre des première et deuxième distances, par comparaison avec une distance prédéterminé et prise de la moyenne des comparaisons.

Avantageusement le procédé comprend une cinquième étape de détermination d'une première inclinaison d'un premier axe à vue associé à un desdits points de coupure par rapport à un axe verticale et d'une deuxième inclinaison d'un deuxième axe à vue associé à un autre desdits points de coupure. De plus la deuxième étape est adaptée pour la détermination de la dispersion spatiale à partir en outre des première et deuxième inclinaisons.

Avantageusement l'angle prédéterminé est obtenu comme étant un angle minimisant l'erreur de l'estimation du temps de traversée

Avantageusement l'angle prédéterminé est $\dfrac{2\pi}{n}$ avec n le nombre de points de coupure de la ionosphère.

Avantageusement la distance prédéterminée est obtenue comme étant une distance minimisant l'erreur de l'estimation du temps de traversée

L'invention a également pour objet un système comportant un satellite et au moins deux stations au sol mettant en oeuvre le procédé de détermination d'une erreur de l'estimation du temps de traversée.

L'invention sera mieux comprise et d'autres avantages apparaîtront à la lecture de la description détaillée des modes de réalisation donnés à titre d'exemples non limitatifs sur les figures suivantes.

La figure 1, présente le procédé suivant un aspect de l'invention
La figure 2, présente le procédé suivant un deuxième aspect de l'invention
La figure 3 présente deux exemples de projection des points de pénétration sur un cercle contenant les points idéaux.
La figure 4 présente à gauche, un exemple de projection de cinq points de pénétration et, à droite, un exemple de cinq points appartenant à un ensemble de points idéalement répartis.
La figure 5 présente la distance $d_0$.
La figure 6 présente la zone autour du point d'intérêt séparée en *K* anneaux contigus
La figure 7 présente l'inclinaison des axes à vue
La figure 8 présente une maillage triangulaire
La figure 9 présente un mode de réalisation du calcul de VTEC
La figure 10 présente un autre mode de réalisation du calcul de VTEC

Le procédé de l'invention permet de déterminer l'erreur du temps de propagation d'un signal passant par un axe à vue vertical et coupant la ionosphère en un point appelé point d'intérêt.

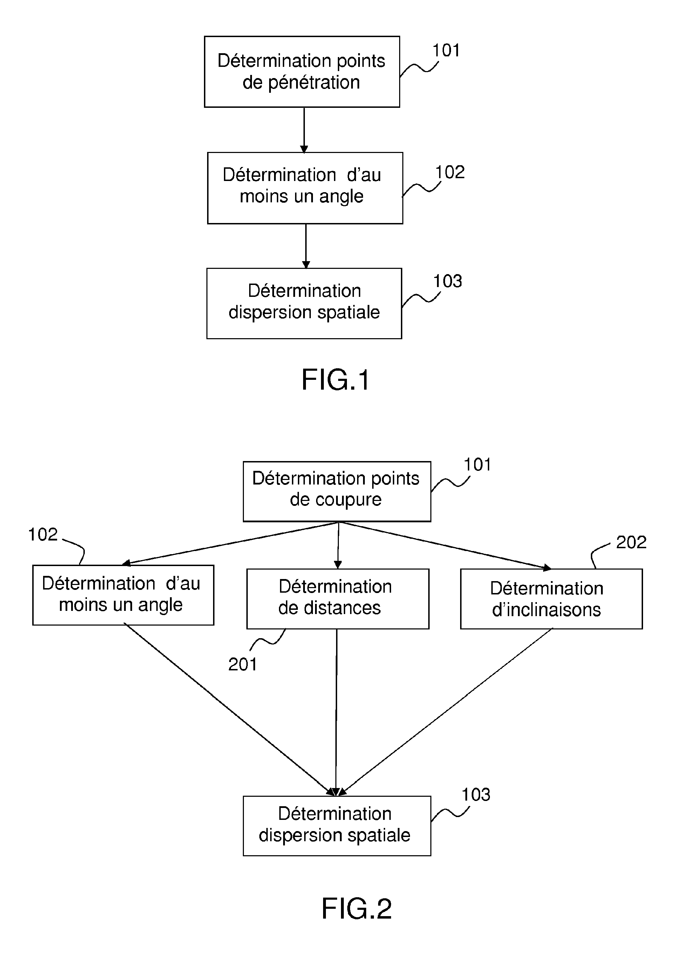

Le procédé tel que présenté figure 1 comporte une première étape 101 de détermination d'au moins deux points de coupure entre la ionosphère, modélisée par la surface d'un polyèdre entourant la Terre, et deux axes à vue différents. Ces axes à vue relient un satellite et une station au sol. Chacun des deux points de coupure ou de pénétration est respectivement associé à un satellite et à un terminal satellitaire ou à une station au sol. Chaque point de pénétration est situé à l'intersection entre un axe à vue du satellite et la surface du polyèdre. Le satellite et/ou la station au sol sont différent pour des axes à vue différents. Le procédé comporte ensuite une deuxième étape 102 de détermination d'au moins un angle formé par un segment allant du point d'intérêt à un des points de coupure et par un segment allant du point d'intérêt à un autre des points de coupure. Enfin le procédé comporte une troisième étape 103 de détermination de la dispersion spatiale desdits points de coupure à partir dudit angle.

On sait que l'estimation du délai de propagation associé à un point de la surface du polyèdre connu sous le nom d'IGP est obtenue par interpolation linéaire des délais de propagation associés aux différents points de pénétration (IPP). De plus on définit des points idéalement répartis comme étant des points de la surface du polyèdre pour lesquels, cette interpolation linéaire minimise l'erreur d'estimation du délai de propagation associé à ce point. La position géométrique réalisant l'erreur minimale d'interpolation se définit selon trois types de paramètres. Le premier type de paramètre est l'angle entre les différents points de pénétration et les points idéaux. Le deuxième type de paramètre est la distance entre les différents points de pénétration et les points idéaux. Le troisième type de paramètre est l'élévation (l'élévation est définie comme l'angle entre l'axe à vue et la verticale) des lignes de vues des différents points de pénétration et la comparaison avec une élévation verticale.

Le procédé tel que présenté figure 2 présente en outre une quatrième étape 201 de détermination d'une première distance entre le point d'intérêt et un des points de coupure et une deuxième distance entre le point d'intérêt et un autre des points de coupure. Le procédé le que présenté figure 2 présente aussi une cinquième étape 202 de détermination d'une première inclinaison d'un premier axe à vue associé à un desdits points de coupure et d'une deuxième inclinaison d'un deuxième axe à vue associé à un autre desdits points de coupure. Dans certains modes de réalisation il est possible de n'effectuer que la quatrième étape 201 ou que la cinquième étape 202. Enfin la troisième étape 103 est adaptée pour déterminer la dispersion spatiale à partir des distances et/ou des inclinaisons.

Dans un premier mode de réalisation, le calcul de l'estimation de l'imprécision passe par le calcul de la déviation standard notée $\sigma_p$ qui mesure la dispersion spatiale entre les points de pénétration et les points de la ionosphère idéalement répartis pour minimiser l'erreur d'estimation du temps de propagation.

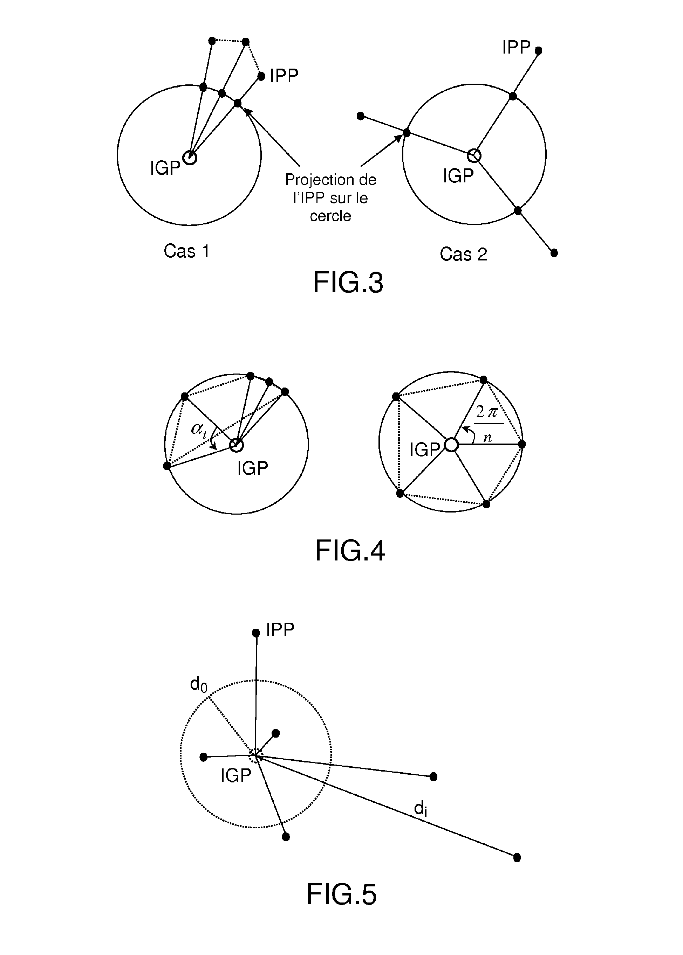

Les points idéalement répartis le sont sur un cercle unité dont le centre est le point d'intérêt et le rayon est déterminé. Ces points sont séparés d'un angle de $\frac{2\pi}{n}$ où *n* est le nombre de points. Les points de pénétration (IPP) sont eux projetés sur le cercle contenant les points idéalement répartis. La figure 3 présente deux exemples de cette projection. La figure 4 présente, à gauche, un exemple de projection de cinq points de pénétration et à droite un exemple de cinq points idéalement répartis. Dans le cas de la figure 4, les points projetés sont séparés d'un angle noté $\alpha_i$ et les points idéaux sont séparés d'un angle $\frac{2\pi}{5}$.

Dans le cas, la déviation standard notée $\sigma_p$ est obtenue comme étant la moyenne, de la différence au carré entre :

- les angles $\alpha_i$ exprimés en radiant des points projetés et

- les angles $\frac{2\pi}{n}$ exprimés en radiant des points idéalement répartis.

$$\sigma_p^2 = \frac{c}{\pi^2} E\left[\left(\frac{2\pi}{n} - \alpha_i\right)^2\right]$$

*E*[ ] représente l'espérance mathématique.

Dans cette équation, c est un paramètre de configuration permettant de régler le poids de la mesure de dispersion angulaire dans l'estimation de l'erreur de calcul du délai de propagation. Ce paramètre est définit par réglage à partir de données réelles en fonction du volume de protection minimal que le système SBAS choisit de diffuser.

Afin de simplifier le calcul de la moyenne, il est possible de ne pas prendre en compte la contribution du dernier angle $\alpha_n$. En effet la valeur de cet angle est contenue dans les autres angles par la formule $\alpha_n = 2\pi - \alpha_1 - \cdots - \alpha_{n-1}$. La formule de la déviation standard est alors :

$$\sigma_p^2 = \frac{c}{\pi^2} \frac{1}{n-1} \sum_{i=1}^{n-1} \left(\frac{2\pi}{n} - \alpha_i\right)^2$$

La valeur de cette déviation standard est bornée par une valeur finie quelque soit le nombre de points de pénétration. De plus, elle vaut zéro lorsque les points de pénétration coïncident avec une configuration idéale. Au contraire, dans le cas où les points de pénétration sont dans la plus mauvaise configuration (ceci est le cas lorsque tous les points de pénétration coïncident en un même point), la déviation standard vaut $\frac{1}{\sqrt{n}}$.

En plus de la prise en compte de la dispersion angulaire il est possible de prendre en compte la dispersion en distance des points de pénétration par rapport au point d'intérêt.

Il est possible, pour réaliser ceci, d'ajouter un facteur dans l'expression de la déviation standard. Pour ce faire, on considère les points de percements situés au-delà d'une distance $d_0$ du point d'intérêt IGP. En deçà de cette distance les points IPP sont considérés comme suffisamment proches pour permettre une taxonomie pertinente. Typiquement la distance $d_0$, telle que représentée figure 5, correspond à la base d'un cône d'ouverture 3.5°, 5°, etc., permet de définir les points qui sont pris en compte dans le calcul de la dispersion spatiale.

Le paramètre définissant la dispersion spatiale est alors :

$$S = cE\left[\left(\frac{d_i\chi(d_i,d_0)}{d_0}\right)^2\right] = \frac{c}{n}\sum_{i=1}^{n}\left(\frac{d_i\chi(d_i,d_0)}{d_0}\right)^2$$

Dans cette équation $d_i$ est la distance sphérique entre le point de pénétration *i* et le point d'intérêt du polyèdre, c est un paramètre de configuration permettant de régler le poids de la mesure de dispersion spatiale dans l'estimation de l'erreur de calcul du délai de propagation, *n* est le nombre de point d'interception considérés et $\chi(d_i, d_0)$ est un entier défini ainsi :

$$\begin{cases} \chi(d_i, d_0) = 1 \; si \; d_i > d_0 \\ \chi(d_i, d_0) = 0 \; si \; d_i \le d_0 \end{cases}$$

La déviation standard $\sigma_p$ est alors définie de la manière suivante :

$$\sigma_p^2 = \beta \frac{c}{\pi^2} E\left[\left(\frac{2\pi}{n} - \alpha_i\right)^2\right] + (1 - \beta)S$$

Dans cette équation, $\beta$ est un paramètre de réglage (compris entre 0 et 1) permettant de choisir de privilégier l'un ou l'autre terme de l'équation.

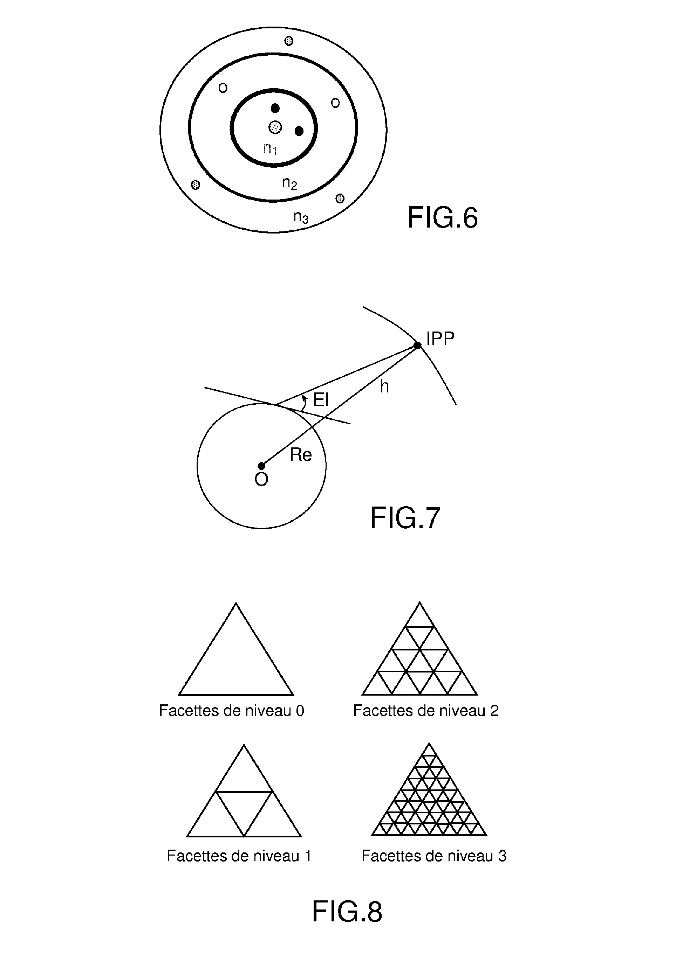

Dans un second mode de calcul de la dispersion en distance des points de pénétration par rapport au point d'intérêt, les points de pénétration sont classés en fonction de leur distance au point d'intérêt. La zone autour du point d'intérêt est séparée en K anneaux contigus tels que représentés figure 6. Dans chaque zone les distances entre le point d'intérêt et les points de pénétration sont corrélées. A chaque anneau k est associé un coefficient de pondération noté $w_k$, et un nombre de points de pénétration noté $n_k$. Le nombre total de points de pénétration pris en compte est alors de $= \sum_{k=1}^{K} n_k$ .

Les coefficients $w_k$ sont définis selon une loi numérique décroissante, maximale sur le disque contenant le point d'intérêt IGP et minimale à l'extérieur du dernier anneau.

Dans ce cas le paramètre définissant la dispersion spatiale est obtenu grâce à l'équation :

$$S = -\frac{c}{W} \sum_{i=1}^{K} w_k \frac{n_k}{N} \ln \frac{n_k}{N} \text{ avec } W = \sum_{k=1}^{K} w_k$$

Le résultat de cette équation est homogène à une entropie. Cette équation est obtenue à partie de la discrétisation de l'équation générale suivante :

$$S = -\frac{c}{W} \int_I w(x)p(x) \ln(p(x)) \, dx \text{ avec } W = \int_I w(x) dx$$

Dans cette équation, *p(x)* est la densité de probabilité d'avoir un point de pénétration dans l'anneau situé à une distance comprise entre *x* et *x + dx* du point d'intérêt.

Il est de plus possible de prendre en compte l'inclinaison de l'axe à vue associé à un point de pénétration. Dans ce cas un facteur d'oblicité *F* de l'axe à vue est défini par:

$$F(El) = \left(1 - \left(\frac{R_e \cos El}{R_e + h}\right)\right)^{-\frac{1}{2}}$$

Dans cette équation El est l'élévation du trajet, $R_e$ est le rayon de la terre et *h* la hauteur de la ionosphère. Ces différents éléments sont présentés sur la figure 7.

Ce facteur d'oblicité permet de faire la correspondance entre le temps de trajet dans le cas d'un axe vertical et le temps de trajet dans le cas d'un axe incliné. Le principe est donc de considérer que les trajets avec un axe vertical sont les trajets pour lesquels le calcul de la durée est la meilleure. En effet le calcul de la durée de trajet fait l'hypothèse d'une couche ionosphérique fine, cette hypothèse provoque donc une erreur dans le cas où l'axe du trajet est incliné.

La déviation standard est donc augmentée du facteur suivant ;

$$f = \frac{c}{W} \sum_{i=1}^{n} \nabla F(El_i)^2 \left( F(\bar{El}) - 1 \right)^2 \text{ avec } W = \sum_{i=1} \nabla F(El_i)^2$$

Dans cette équation c est un paramètre de configuration permettant de régler le poids de la mesure de dispersion d'oblicité dans l'estimation de l'erreur de calcul du délai de propagation et $\nabla F(El_i)$ représente la fonction laplacienne du facteur d'oblicité. Cette fonction laplacien représente la mesure de la différence entre la valeur du facteur d'oblicité $F$ en tout point de pénétration et la valeur moyenne du facteur d'oblicité $F$ dans le voisinage d'un point de pénétration. Ce terme permet donc de modéliser la variation du facteur d'oblicité à proximité d'un point du polyèdre défini pour son élévation.

La déviation standard, notée $\sigma_p$, prenant en compte le critère d'oblicité est donc définie par ;

$$\sigma_p^2 = \frac{(1 - \beta_1 - \beta_2)c}{n\pi^2} \sum_{i=1}^{n} \left( \frac{2\pi}{n} - \alpha_i \right)^2 + \beta_1 S + \beta_2 f$$

Les coefficients $\beta_i$ sont choisis de manière à ce que $\sum \beta_i = 1$.

Dans un deuxième mode de réalisation, le calcul de l'estimation de l'imprécision passe par le calcul de la déviation standard notée $\sigma_p$ qui mesure la dispersion spatiale entre les points de pénétration et les points idéalement répartis. Ces points sont situés à une distance déterminée du point d'intérêt.

Dans ce cas la déviation standard est de la forme :

$$\sigma_p^2 = \frac{1}{W} \frac{c}{\pi^2} \sum_{i=1}^{n} w_i \left( \frac{2\pi}{n} - \alpha_i \right)^2$$

avec $W = \sum_{i=1}^{n} w_i$

On a donc ajouté, pour chaque point $i$, un coefficient de pondération $w_i$.

Ces pondérations $w_i$ peuvent être dérivées d'une fonction à priori constituée de la corrélation spatiale ionosphérique, divisée par la déviation standard du délai vertical associé au point de pénétration. Cette pondération est de la forme :

$$w_i = \sigma^i e^{a\left(\frac{d_i}{d_0}\right)^2}$$

Dans cette équation $d_i$ est la distance sphérique entre le point de pénétration $i$ et le point d'intérêt, $n$ est le nombre total de points de pénétration, $a$ et $d_0$ sont des paramètres de configuration. Cette équation donne donc un poids fort à un point de pénétration loin du point d'intérêt.

Une autre définition des pondérations est la suivante, cette définition donne un facteur de pondération moins important ;

$$w_i = a\sigma_i \left( \frac{d_i}{d_0} \right)^2$$

L'écart type $\sigma_i$ représente le bruit de la mesure vue comme une distribution de bruit blanc non corrélé.

Dans le cas de ces points idéalement répartis, il est également possible de prendre en compte l'inclinaison de l'axe à vue associé à un point de pénétration. Pour ce faire, on peut incrémenter les facteurs de pondération $w_i$ afin de prendre en compte l'angle d'élévation de l'axe à vue. Les facteurs de pondération sont donc modifiés de la manière suivante :

$$w_i = \sigma_i e^{a\left(\frac{d_i}{d_0}\right)^2} + bF(El)\nabla F(El_i)^2$$

La valeur représentative de l'imprécision sur le délai de propagation associé à un point d'intérêt IGP est alors donnée par la formule suivante :

$$GIVE = TGIVE + t(n)^2 \left( \overline{UIVE} + k.\sigma_p^2 \right)$$

Dans cette équation, *GIVE* est l'erreur d'imprécision du délai ionosphérique (Grid Ionospheric Vertical Error pour son acronyme anglais), *TGIVE* est la variance calculée par interpolation à partir du modèle TRIN et du filtrage associé, $t(n)^2$ est l'écart type d'une distribution de Student à *n* degré de liberté, *n* étant le nombre de point de percement IPP utilisés pour le calcul de $\sigma_p^2$, $\overline{UIVE}$ représente la moyenne de l'erreur de calcul du délai ionosphérique sur chaque point de percement IPP, k est un coefficient permettant de normaliser $\sigma_p^2$.

L'homme du métier sait comment calculer les valeurs *TGIVE* et *UIVE*, il peut en particulier se référer au document « Preliminary anaysis of grid ionospheric vertical error for GAGAN » de Niranjan Prasad édité dans GPS SOLUTIONS, SPRINGER, BERLIN, DE, volume 11, numéro. 4, 19 juin 2007 pages 281-288, qui décrit un mode de calcul de ces paramètres.

L'homme du métier sait aussi utiliser le document "A New Method for Monitoring the Earth's Ionospheric Total Electron Content Using the GPS Global Network" de A.J. Mannucci, B.D. Wilson, C.D. Edwards et publié durant la conférence ION GPS-93.

Ce document présente la solution TRIN pour son acronyme anglo-saxon *TRiangular INterpolation* afin d'estimer le contenu d'électrons de l'ionosphère et la localisation du contenu électronique à l'aide de la mesure de fréquences doubles recueillies par un ensemble de stations ou capteurs de détection . Dans cette méthode, l'ionosphère est considérée comme une couche mince, dans lequel tout le retard ionosphère du signal est accumulé. Cette couche mince permet de considérer que la quantité de retard perçu par un signal ne dépend que du TEC à l'endroit où il perce la couche mince de l'ionosphère, ce point est appelé point de percement de la ionosphère (IPP). La quantité typique pour décrire le retard à un IPP est le délai que le signal vertical rassemblerait à ce point. Ceci est lié au TEC vertical (VTEC) , c'est à dire l'intégrale de la densité électronique intégré ionosphère le long de la trajectoire verticale du signal dans la ionosphère.

Ce procédé modélise la couche ionosphérique supposée fine par une approximation polytopiale, Le modèle est construit en utilisant un polyèdre régulier de base qui est raffinée par une subdivision successive (un nouveau sommet est posé au milieu de chaque arête) tel que cela est représenté à la figure 8. Il est également fixe par rapport à un système solaire, qui est un référentielle magnétique, de telle sorte chaque sommet est à une heure solaire constante.

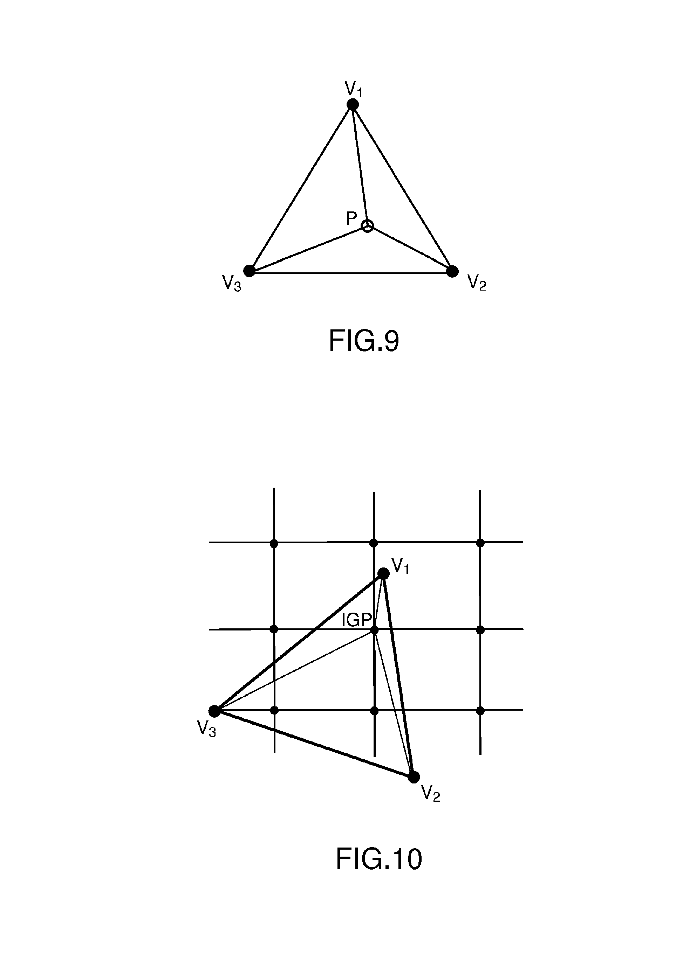

L'estimation des VTEC sur chaque sommet de la grille du modèle TRIN, tel que défini comme précédemment, se fait par en temps réel par une procédé d'ajustement classique (type Kalman) Les mesures qui alimentent du filtre d'ajustement sont déterminées à partir de la valeur VTEC associée a un point de percement IPP. Ces mesures sont mathématiquement construites comme l'équation d'interpolation linéaire pondérée de chaque IPP (point P) avec trois sommets du triangle contenant le point IPP (v1, v2, v3), voir figure 9. Ces mesures sont donc déterminées en utilisant la relation $VTEC_p = w_1 \cdot VTEC_{v1} + w_2 \cdot VTEC_{v2} + w_3 \cdot VTEC_{v3}$. Dans cette relation $VTEC_p$ représente la VTEC (connue) du point P, $VTEC_{vi}$ représente la VTEC au point *vi* qu'il faut ajuster et $w_i$ représente le coefficient de pondération au point *vi*.

Les valeurs inconnues sont donc VTEC$_{vi}$ associées à chaque sommet. Le processus de filtrage (par exemple un filtre de Kalman) adapte les valeurs $VTEC_{vi}$ en utilisant la relation $VTEC_p = w_1 \cdot VTEC_{v1} + w_2 \cdot VTEC_{v2} + w_3 \cdot VTEC_{v3}$. Cette relation est mise en oeuvre pour chaque point P où la VTEC est mesurée. Les sorties des filtres sont le couple valeur de la VTEC et variance de la VTEC pour chaque sommet *vi* du polyèdre.

Dans une deuxième étape pour chacun des points de la grille (IGP) de la grille, la méthode classique de TRIN permet de calculer une valeur moyenne pondérée à l'aide des trois valeurs VTEC estimées proches de la grille. La formule d'interpolation linéaire est la relation $VTEC_p = w_1 \cdot VTEC_{v1} + w_2 \cdot VTEC_{v2} + w_3 \cdot VTEC_{v3}$ où les variables $VTEC_{vi}$ sont maintenant connues. Il s'agit donc du processus inverse de la première étape. Les sorties des filtres sont le couple valeur de la VTEC et variance de la VTEC pour chaque sommet pour chaque IGP de la grille. La valeur de la variance de la VTEC associée à un IGP est notée TGIVE_basic. Ceci est en particulier présenté sur la figure 10.

Ainsi il est possible d'incrémenter le TGIVE_basic de la variance de base de l'une quelconque des points IGP avec des informations locales introduites par un point IPP, afin d'éviter l'estimation trop optimiste venant de modèle de TRIN globale. Ceci permet de garantir de l'intégrité de la correction ionosphérique pour chaque point de la grille.

**Revendications**

1. Procédé de détermination d'une erreur de l'estimation du temps de traversée de la ionosphère par un signal suivant un axe à vue vertical associé à un récepteur, ledit axe à vue vertical coupant la ionosphère en un point d'intérêt, ledit axe à vue vertical étant un axe passant par le récepteur et un satellite d'intérêt, ledit procédé étant **caractérisée en ce qu'**il comprend :

   - une première étape de détermination (101) d'au moins deux points de coupure de la ionosphère par deux axes à vue entre un satellite et au moins deux stations au sol ou une station au sol et au moins deux satellites
   - une deuxième étape de détermination (102) d'au moins un angle formé par un segment allant dudit point d'intérêt à un desdits points de coupure et par un segment allant dudit point d'intérêt à un autre desdits points de coupure
   - une troisième étape de détermination (103) de la dispersion spatiale desdits points de coupure par rapport audit point d'intérêt à partir dudit angle, par différence avec un angle prédéterminé et prise de la moyenne dudit ou desdits différences,
   - une quatrième étape de détermination d'une erreur de l'estimation du temps de traversée de la ionosphère par ajout :

      • d'une première erreure de l'estimation du temps de traversée dépendante d'une variance calculée par interpolation à partir d'un modèle TRIN,
      • à une deuxième erreure de l'estimation du temps de traversée dépendante de ladite dispersion spatiale.

2. Procédé de détermination selon la revendication 1 dans lequel ladite quatrième étape de détermination utilise la relation :

$$GIVE = TGIVE + t(n)^2\left(\overline{UIVE} + k.\sigma_p^2\right)$$

où *GIVE* est ladite erreur de l'estimation du temps de traversée de la ionosphère,
*TGIVE* est ladite première erreur

$t(n)^2\left(\overline{UIVE} + k.\sigma_p^2\right)$ est ladite deuxième erreur et est composée de :

$\sigma_p^2$ qui est ladite dispersion spatiale,

$t(n)^2$ qui est l'écart type d'une distribution de Student à *n* degré de liberté,

*n* étant le nombre desdits points de coupures utilisés pour le calcul de $\sigma_p^2$, $\overline{UIVE}$ qui représente la moyenne de l'erreur de calcul du délai de la traversée de la ionosphère par un signal suivant lesdits deux axes à vues et

k qui est un coefficient permettant de normaliser $\sigma_p^2$.

3. Procédé de détermination selon la revendication 1 ou 2 **caractérisée en ce qu'**il comprend en outre :

   - une quatrième étape de détermination (201) d'une première distance entre ledit point d'intérêt et un desdits points de coupure et d'une deuxième distance entre ledit point d'intérêt et un autre desdits points de coupure

et dans laquelle ladite troisième étape est adaptée pour la détermination de ladite dispersion spatiale à partir en outre desdites première et deuxième distances, par comparaison avec une distance prédéterminé et prise de la moyenne de ladite ou desdits comparaisons

4. Procédé de détermination selon l'une des revendications 1 à 3 **caractérisé en ce qu'**il comprend en outre ;

   - une cinquième étape de détermination (202) d'une première inclinaison d'un premier axe à vue associé à un desdits points de coupure par rapport à un axe verticale et d'une deuxième inclinaison d'un deuxième axe à vue associé à un autre desdits points de coupure

et dans laquelle ladite deuxième étape est adaptée pour la détermination de ladite dispersion spatiale à partir en outre desdites première et deuxième inclinaisons

**5.** Procédé de détermination selon la revendication 3 ou 4 dans lequel ledit angle prédéterminé est obtenu comme étant un angle minimisant l'erreur de l'estimation du temps de traversée

**6.** Procédé de détermination selon l'une des revendications 1 à 5 dans lequel ledit angle prédéterminé est $\frac{2\pi}{n}$ avec $n$ le nombre desdits points de coupure de la ionosphère.

**7.** Procédé de détermination selon l'une des revendications 1 à 6 dans lequel ladite distance prédéterminée est obtenue comme étant une distance minimisant l'erreur de l'estimation du temps de traversée

**8.** Système comportant un satellite et au moins deux stations au sol mettant en oeuvre le procédé selon l'une des revendications 1 à 7.

FIG.1

FIG.2

FIG.3

FIG.4

FIG.5

FIG.6

FIG.7

Facettes de niveau 0

Facettes de niveau 2

Facettes de niveau 1

Facettes de niveau 3

FIG.8

FIG.9

FIG.10

Europäisches
Patentamt

European
Patent Office

Office européen
des brevets

# RAPPORT DE RECHERCHE EUROPEENNE

Numéro de la demande

EP 13 19 4950

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | NIRANJAN PRASAD ET AL: "Preliminary analysis of grid ionospheric vertical error for GAGAN", GPS SOLUTIONS, SPRINGER, BERLIN, DE, vol. 11, no. 4, 19 juin 2007 (2007-06-19), pages 281-288, XP019546660, ISSN: 1521-1886, DOI: 10.1007/S10291-007-0068-6 * le document en entier * ----- | 1-8 | INV.<br>G01S19/02<br>G01S19/07<br><br>ADD.<br>G01S19/40 |
| A | WO 99/18677 A1 (AIRSYS ATM INC [US]; HUNDLEY THOMAS WARREN [US]; ROWSON STEPHEN V [US]) 15 avril 1999 (1999-04-15) * page 27, ligne 12 - page 42, ligne 11 * * page 58, ligne 3 - page 59, ligne 17 * * page 65, ligne 3 - page 70, ligne 19 * ----- | 1-8 | |
| A | JUBIN J C ET AL: "Wide-area differential GPS reference-station placement", POSITION LOCATION AND NAVIGATION SYMPOSIUM, 1996., IEEE 1996 ATLANTA, GA, USA 22-26 APRIL 1996, NEW YORK, NY, USA,IEEE, US, 22 avril 1996 (1996-04-22), pages 503-514, XP010163317, DOI: 10.1109/PLANS.1996.509121 ISBN: 978-0-7803-3085-6 * page 503 - page 506, alinéa 2ème * * page 508, alinéa dernier - page 513, alinéa 1er * ----- | 1-8 | |

| DOMAINES TECHNIQUES RECHERCHES (IPC) |
|---|
| G01S |

Le présent rapport a été établi pour toutes les revendications

| Lieu de la recherche | Date d'achèvement de la recherche | Examinateur |
|---|---|---|
| Munich | 28 février 2014 | Haugg, Sabine |

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 13 19 4950

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

28-02-2014

| Document brevet cité au rapport de recherche | Date de publication | Membre(s) de la famille de brevet(s) | Date de publication |
|---|---|---|---|
| WO 9918677         A1 | 15-04-1999 | AU          1900199  A<br>WO          9918677  A1 | 27-04-1999<br>15-04-1999 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **DE NIRANJAN PRASAD.** Preliminary anaysis of grid ionospheric vertical error for GAGAN. SPRINGER, 19 Juin 2007, vol. 11, 281-288

- **DE A.J. MANNUCCI ; B.D. WILSON ; C.D. EDWARDS.** A New Method for Monitoring the Earth's Ionospheric Total Electron Content Using the GPS Global Network. *conférence ION GPS-93*